# EUROPEAN PATENT APPLICATION

(11) **EP 1 845 607 A1**
(43) Date of publication of application: **17.10.2007**
(21) Application number: 06112658.7
(22) Date of filing: 13.04.2006
(51) Int. Cl.: H02N 2/02

(54) **Electromechanical actuator structure**

(71) Applicant: Taiwan Advanced Materials, Kaohsiung, County 815 (TW)
(72) Inventor: LEI, Sio-Hou, 813, Kaohsiung City (TW); PAN, Wen-Sen, Yanchao Shiang, Kaohsiung County 824 (TW); WANG, Kai-Lu, 600, Chiayi City (TW)
(74) Representative: Chaillot, Geneviève

(57) **Abstract**

An electromechanical actuator structure is disclosed to include an electric actuator (10) affixed to a base (20), a resilient drive member (30), which has a fixed segment (31) fixedly connected to the electric actuator for synchronous reciprocating movement and a resilient segment (32) extending out of the electric actuator and terminating in a conduction portion (321), a passive member (40) mounted in the conduction portion of the resilient drive member, and a spring member (50) mounted on the resilient segment of the resilient drive member and forcing the passive member into friction engagement with the conduction portion for enabling the passive member to be moved with the resilient drive member.

## Description

### BACKGROUND OF THE INVENTION

### 1. Field of the Invention:

The present invention relates to an electromechanical actuator and more particularly, to an electromechanical actuator structure practical for use in a flat, small-sized product, such as a lens or image sensor of a mobile electronic product having a photographing function. This increases the displacement speed of the passive member and lowers the working frequency of the drive pulse by the use of an electric actuator to produce a displacement action and the use of a resilient drive member to increase the amount of displacement of the electric actuator to the passive member.

### 2. Description of the Related Art:

U.S. Patent No. 6,218,764, entitled "Actuator using electromechanical transducer and drive pulse generator suitable thereof", discloses an actuator using an electromechanical transducer capable of driving efficiently and at high speed, which comprises an electromechanical transducer for repeatedly producing linear displacement in a predetermined direction, a first member fixedly coupled to one end of the electromechanical transducer, a second member frictionally coupled to the first member, the first member and the second member being moveable in the predetermined direction; and a drive pulse generating means for supplying a drive pulse to the electromechanical transducer, wherein the drive pulse has the shape of a sawtooth waveform having a gradually changing portion and a rapidly changing portion.

The aforesaid design has numerous drawbacks as follows:
1. The actuator and the drive shaft are not fixedly connected together, thereby lowering the reliability of the structure.
2. Because a piezoelectric element is directly used, the lower amount of displacement of the piezoelectric element does not allow further lowering of the working frequency of the actuator.
3. Due to high-frequency harmonic wave in the waveform, leakage current is high.
4. Because the space between the actuator and the drive shaft must be kept empty, much installation space is required, and the structure cannot be further reduced in size.
5. The piezoelectric actuator used has a low amount of displacement and low output, variation of the load may cause a trouble.

### SUMMARY OF THE INVENTION

The subject-matter of the present invention is an electromechanical actuator structure, comprising:
an electric actuator, said electric actuator having a bottom side affixed to a base and a top side;
a resilient drive member, said resilient drive member having a fixed segment fixedly connected to the top side of said electric actuator for synchronous reciprocating movement with said electric actuator and a resilient segment extending from said fixed segment out of said electric actuator, said resilient segment having a conduction portion;
a passive member mounted in said conduction portion of said resilient segment of said resilient drive member; and
a spring member mounted on said resilient segment of said resilient drive member and forcing said passive member into friction engagement with said conduction portion of said resilient segment of said resilient drive member for enabling said passive member to be moved with said resilient drive member.

Said electric actuator can be a magnetostrictive actuator, or a piezoelectric ceramic actuator.

Said passive member can have a surface formed of a material of high coefficient of friction.

Said spring member can have a first end affixed to a rear end of said resilient segment adjacent to said fixed segment of said resilient drive member, and a free end movably coupled to a front end of said resilient segment remote from said fixed segment of said resilient drive member.

Said conduction portion can be an independent member made of a material different from said resilient drive member and mounted on said resilient member.

Said passive member can be fixedly connected to a driven member.

An embodiment of the invention provides an electromechanical actuator structure, which eliminates the aforesaid drawbacks. An embodiment utilizes an electric actuator controllable to reciprocate by electric drive pulses. During reciprocating movement of the electric actuator, a resilient drive member that is connected to the electric actuator is synchronously reciprocated, thereby causing a passive member to move continuously due to the effect of friction contact between the resilient drive member and the passive member subject to the principle of inertia.

The passive member can be directly affixed to a driven member (for example, the lens or image sensor of a mobile electronic product having a photographing function). The amplitude of oscillation of the resilient drive member enlarges the amount of displacement of the electric actuator relative to the passive member, thereby increasing the displacement speed of the passive member and lowering the working frequency of the drive pulse.

Therefore, embodiments of the invention have following advantages over the conventional design:
1. The invention allows fixed connection between the actuator and the drive member to improve the reliability of the structure.
2. The structural design of the invention enlarges the amount of displacement of the electric actuator relative to the passive member, thereby increasing the displacement speed and lowering the working frequency.
3. By means of changing the waveform of the drive voltage or current, leakage current is minimized.
4. The passive member is directly connected to the driven member, saving much installation space.
5. The electric actuator can be a magnetostrictive actuator that provides a big amount of displacement and output.

### BRIEF DESCRIPTION OF THE DRAWINGS

FIG. 1 is a schematic drawing illustrating the structure of an electromechanical actuator structure according to the present invention.
FIG. 2 is a perspective elevational view illustrating the electromechanical actuator structure according to the present invention.
FIG. 3 is a top view illustrating the electromechanical actuator structure shown in FIG. 2.
FIG. 4 is a front view illustrating the electromechanical actuator structure shown in FIG. 2.
FIG. 5 is a schematic drawing illustrating the electromechanical actuator structure of the present invention in action.
FIG. 6 is a schematic drawing illustrating an application example of the present invention.

### DETAILED DESCRIPTION OF THE ILLUSTRATED EMBODIMENTS

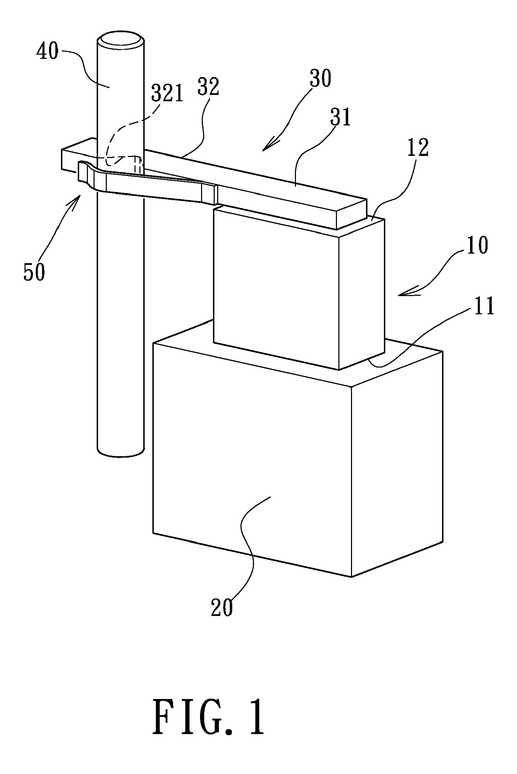

Referring to FIG. 1, an electromechanical actuator structure in accordance with an embodiment of the present invention is shown comprising an electric actuator **10.** The electric actuator **10** has a bottom side **11** connected to a fixed base **20,** and a top side **12** connected to a rear fixed segment **31** of a resilient drive member **30.**

The resilient drive member **30** has a front resilient segment **32** forwardly extending from the rear fixed portion **31** out of the electric actuator **10.** When the electric actuator **10** drives the rear fixed segment **31** to displace, the front resilient segment **32** produces a greater amplitude of oscillation relative to the rear fixed segment 31 due to the effect of its resilient material property, thereby amplifying the amount of displacement of the rear fixed segment **31** (i.e., the amount of displacement of the electric actuator **10**). The front resilient segment **32** has a front end terminating in a conduction portion **321.** The conduction portion **321** is preferably made of a material of high coefficient of friction and then fixedly mounted on the resilient drive member **30.** A passive member **40** is mounted in the conduction portion **321.** A spring member **50** is pressed on the passive member **40** against the conduction portion **321** of the resilient drive member **30,** enabling the passive member **40** to make a friction transmission in the conduction portion **30** in axial direction. The surface of the passive member **40** is made of a material of high coefficient of friction.

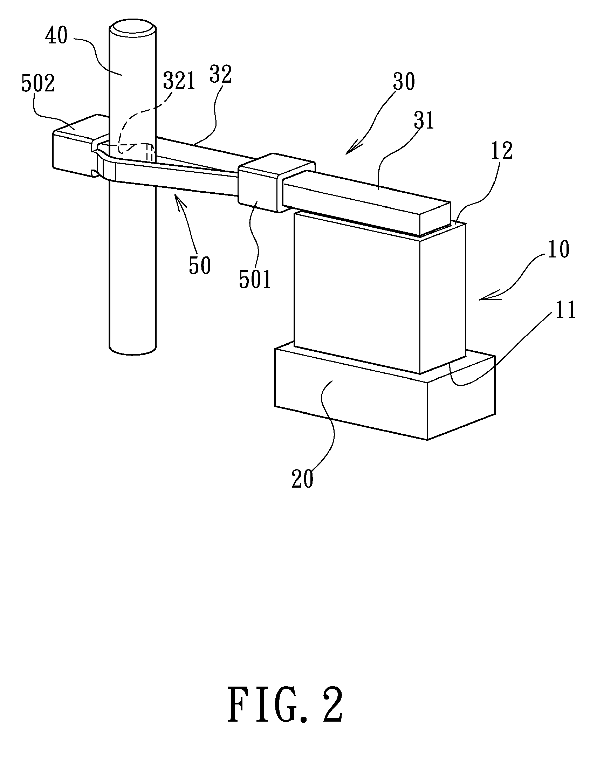

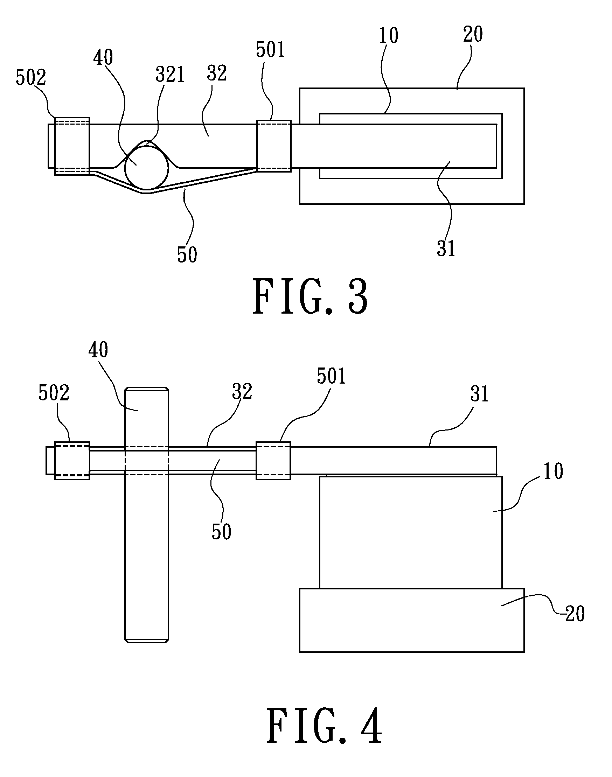

Referring to FIGS. 2~4, the electric actuator **10** can be a magnetostrictive actuator or piezoelectric ceramic actuator. The bottom side **11** and top side **12** of the electric actuator **10** can be respectively fixedly connected to the fixed base **20** and the rear fixed segment **31** of the resilient drive member **30** with a bonding agent or screws.

As stated above, the front segment **32** of the resilient drive member **30** is resilient. When the electric actuator **10** drives the rear fixed segment **31** of the resilient drive member **30** to displace, the front resilient segment **32** produces a greater amplitude of oscillation relative to the rear fixed segment **31.** As stated above, the front end of the front resilient segment **32** is a conduction portion **321,** which is held in friction contact with the passive member **40** by the spring member **50.** The spring member **50** has a first end, namely, the fixed end **501** affixed to the rear end of the front resilient segment **32** of the resilient drive member **30,** and the other end, namely, the free end **502** movably coupled to the front end of the front resilient segment **32** of the resilient drive member **30.**

When in use, a continuous series of drive pulses is inputted into the electric actuator **10** subject to the designed direction of displacement of the passive member **40,** causing the electric actuator **10** to move linearly toward the passive member **40** or rapidly apart from the passive member **40.** During displacement of the electric actuator **10,** the resilient drive member **30** is synchronously reciprocated. At this time, the friction force produced between the passive member **40** and the conduction portion **321** of the resilient drive member **30** forces the passive member **40** to displace in the same direction. However, when the electric actuator **10** is reversed (moved in direction apart from the passive member **40**) rapidly, the rapid displacement of the electric actuator **10** overcomes the friction between the conduction portion **321** of the resilient drive member **30** and the passive member **40,** therefore the passive member **40** is immovable as the resilient drive member **30** is moved with the electric actuator **10** in direction apart from the passive member **40.** By means of the aforesaid action, a continuous series of drive pulses is applied to keep moving the passive member **40** in the predetermined direction.

On the contrary, when wishing to move the passive member **40** in the reversed direction, input reversed sawtooth drive pulses into the electric actuator **10.**

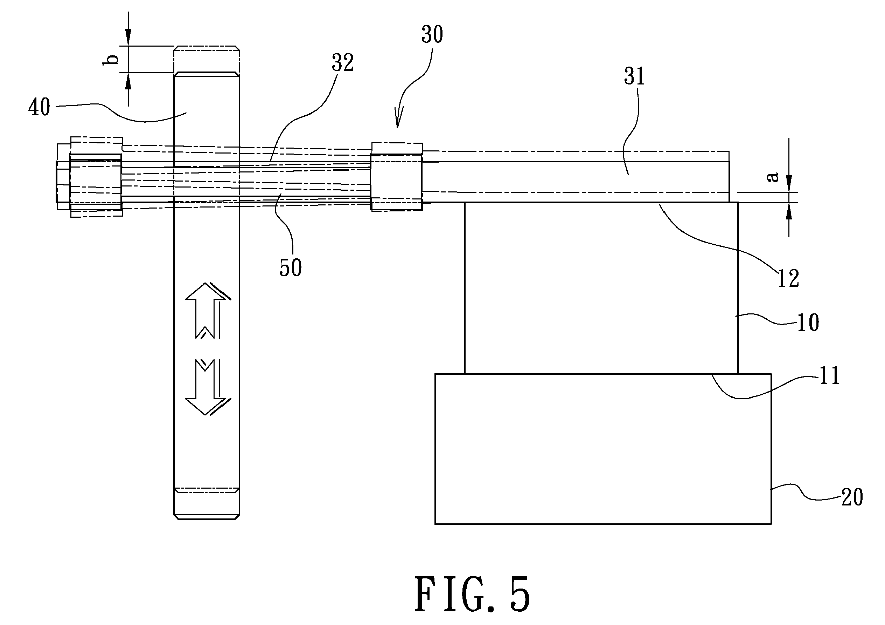

Referring to FIG. 5, by means of the effect of the front resilient segment **32** of the resilient drive member **30** to be capable of producing a greater amplitude of oscillation relative to the rear fixed segment 31 during displacement of the resilient drive member **30,** the amount of displacement of the passive member **40** is enlarged during each displacement of the electric actuator **10.** As shown in FIG. 5, when the electric actuator **10** is controlled by the drive pulse to move to the location indicated by the dotted line, the electric actuator **10** has an amount of displacement "a", and at the same time the rear fixed segment **31** of the resilient drive member **30** has the same amount of displacement "a". However, because the front resilient segment **32** of the resilient drive member **30** produces a greater amplitude of oscillation relative to the rear fixed segment 31, the amount of displacement "b" of the passive member **40** is relatively greater than the amount of displacement "a". The increase of such an amount of displacement greatly increases the displacement speed of the passive member **40** and relatively lowers the working frequency of the drive pulse, thereby achieving the advantages of the present invention.

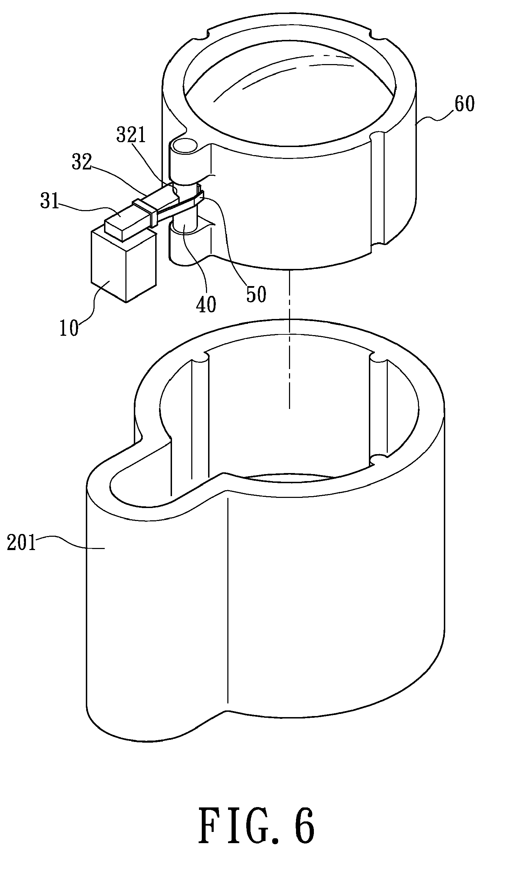

FIG. 6 shows an application example of the present invention for moving a driven member **60.** According to this application example, the driven member **60** is a lens, which is directly affixed to the passive member **40** for movement with the passive member **40;** the electric actuator **10** is fixedly mounted on a lens holder **201** (equivalent to the fixed base **20**). When inputting drive pulses into the electric actuator **10,** the lens **60** is moved linearly in the lens holder **201.** Further, the driven member **40** can be formed integral with a part of the driven member **60,** and the whole assembly of the electromechanical actuator structure can be provided at one lateral side of the driven member **60.** This design is practical for use in a flat, small-sized product, such as camera, CD player, etc., without much installation space.

A prototype of electromechanical actuator structure has been constructed with the features of FIGS. 1~6. The electromechanical actuator structure functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. An electromechanical actuator structure, comprising:
an electric actuator (10), said electric actuator (10) having a bottom side (11) affixed to a base (20) and a top side (12);
a resilient drive member (30), said resilient drive member (30) having a fixed segment (31) fixedly connected to the top side (12) of said electric actuator (10) for synchronous reciprocating movement with said electric actuator (10) and a resilient segment (32) extending from said fixed segment (31) out of said electric actuator (10), said resilient segment (32) having a conduction portion (321);
a passive member (40) mounted in said conduction portion (321) of said resilient segment (32) of said resilient drive member (30) ; and
a spring member (50) mounted on said resilient segment (32) of said resilient drive member (30) and forcing said passive member (40) into friction engagement with said conduction portion (321) of said resilient segment (32) of said resilient drive member (30) for enabling said passive member (40) to be moved with said resilient drive member (30).

2. The electromechanical actuator structure as claimed in claim 1, wherein said electric actuator (10) is a magnetostrictive actuator.

3. The electromechanical actuator structure as claimed in claim 1, wherein said electric actuator (10) is a piezoelectric ceramic actuator.

4. The electromechanical actuator structure as claimed in claim 1, wherein said passive member (40) has a surface formed of a material of high coefficient of friction.

5. The electromechanical actuator structure as claimed in claim 1, wherein said spring member (50) has a first end (501) affixed to a rear end of said resilient segment (32) adjacent to said fixed segment (31) of said resilient drive member (30), and a free end movably coupled to a front end of said resilient segment (32) remote from said fixed segment (31) of said resilient drive member (30).

6. The electromechanical actuator structure as claimed in claim 1, wherein said conduction portion (321) is an independent member made of a material different from said resilient drive member (30) and mounted on said resilient member (30).

7. The electromechanical actuator structure as claimed in claim 1, wherein said passive member (40) is fixedly connected to a driven member (60).
